# EUROPÄISCHE PATENTSCHRIFT

(11) **EP 3 463 761 B1**
(45) Veröffentlichungstag und Bekanntmachung des Hinweises auf die Patenterteilung: **27.01.2021**
(21) Anmeldenummer: 17732322.7
(22) Anmeldetag: 02.06.2017
(51) Int. Cl.: B25F 5/00

(54) **SERVICEEINHEIT UND VERFAHREN ZUR ÜBERWACHUNG UND DOKUMENTATION VON WARTUNGSARBEITEN**
SERVICE UNIT AND METHOD FOR MONITORING AND DOCUMENTING MAINTENANCE WORK
UNITÉ D'ENTRETIEN ET PROCÉDÉ DE SURVEILLANCE ET DE DOCUMENTATION DE TRAVAUX DE MAINTENANCE

(30) Priorität: 07.06.2016 DE 102016110462
(43) Veröffentlichungstag der Anmeldung: 10.04.2019
(73) Patentinhaber: Sartorius Stedim Biotech GmbH, 37079 Göttingen (DE)
(72) Erfinder: BÖTTCHER, Lars, 34212 Melsungen (DE)
(74) Vertreter: Vigand, Philippe
(86) Internationale Anmeldenummer: PCT/EP2017/063424
(87) Internationale Veröffentlichungsnummer: WO 2017/211706

(56) Entgegenhaltungen:
- WO-A1-00/18546
- WO-A1-2015/185974
- DE-A1-102011 005 646
- US-A1- 2003 160 075
- US-A1- 2006 193 262

## Beschreibung

### Gebiet der Erfindung

Die Erfindung betrifft eine Serviceeinheit, die am Körper einer Bedienperson über ein Tragesystem tragbar ist, mit mindestens einer Spannungsquelle zur Spannungsversorgung von mit der Spannungsquelle verbindbaren, elektrisch getriebenen Werkzeugen, Geräten oder Maschinen, wobei die Spannungsquelle aus mindestens einem wiederaufladbaren Akkumulator ausgebildet ist.

Die Erfindung betrifft weiterhin ein Verfahren zur Überwachung und Dokumentation von Wartungsarbeiten mit einer Serviceeinheit nach einem der Ansprüche 1-7.

### Stand der Technik

Insbesondere bei großen Bioreaktoren, die eine Höhe bis zu drei Metern aufweisen, sind Wartungsarbeiten mit unterschiedlichen Werkzeugen durchzuführen, die jeweils elektrisch betrieben werden. Längere Stromkabel sind bei den Wartungsarbeiten hinderlich und übliche Akkus von handbetätigten Werkzeugen sind schnell leer und müssen zeitaufwendig wieder aufgeladen werden.

Weiterhin unterliegen bestimmte biotechnische Produktionsanlagen ggf. auch in Verbindung mit Bioreaktoren einer Dokumentationspflicht. Solche Arbeits- oder Wartungsvorgänge sind bspw. Kunststoffschweißungen oder Schlauchschweißungen. Andere Arbeitsvorgänge sind beispielsweise Montageüberwachung samt Dokumentation oder die Montage eines Einwegbehälters (single-use-Behälters) in einen aufnehmenden Stahlbehälter samt Dokumentation. Die Dokumentation kann sich unter anderem darauf beziehen, wie oft, wann und wo ein Service (z.B. eine Montageüberwachung) durchgeführt wurde oder wo, wann und mit welchen Arbeitsschritten ein Einwegbehälter in einen Stahlbehälter eingefügt wurde. Die Dokumentation kann eine elektronische Signatur, die beteiligten Personen sowie das verwendete Material umfassen. Oft ist es nicht möglich oder auch kundenseitig nicht gewünscht, die Wartungsvorgänge mittels des kundenseitigen Firmennetzes aufzunehmen und zu dokumentieren.

Aus der WO 00/18546 A1 ist eine Serviceeinheit als Energieversorgung für elektrische Geräte, also für elektrisch betriebene Werkzeuge bekannt, in der vorgeschlagen wird, serienmäßige, übliche "Akku-Geräte" von einem am Körper der Bedienperson angeordneten Akkumulator mit Energie zu versorgen, indem ein Kabel vorgesehen wird, das zum Handgerät hin einen Adapter aufweist, welche in den dort vorgesehenen Akkumulatorraum einsetzbar ist. Der Akkumulator ist mit einem an der Bedienperson anordenbaren Element oder Tragesystem versehen, welches als Gürtel, Rucksack oder Tragetasche ausgebildet ist.

Weiterhin ist aus der DE 10 2011 101 554 A1 ein "Akku-Rucksack" als Serviceeinheit bekannt, die am Körper einer Bedienperson über ein Tragesystem tragbar ist und das insbesondere als Rucksack, Gürtel oder Tragetasche mit einer Halterung und einer oder mehreren wiederaufladbaren Batterien zu betreiben von Geräten, Handgeräten wie Bohrmaschinen, Schrauber, Schleifgeräte, Sägen, Handwerkszeug und weiteren Gerätschaften bekannt. Die Batterie, bzw. der Akku in der Trageeinrichtung kann dabei als einzige Energiequelle oder als Zusatzenergiequelle für das Gerät oder ggf. der Originalbatterie für das Gerät dienen.

Nachteilig bei den bekannten Serviceeinheiten ist, dass zur Dokumentation der Wartungsarbeiten die Wartungsarbeiten unterbrochen werden müssen und die Gefahr besteht, dass bestimmte Arbeitsschritte nicht ausreichend dokumentiert werden, weil beispielsweise keine Dokumentationseinheiten am Ort der Tätigkeit vorliegen.

Aus der DE 10 2012 217 572 A1 ist ein Bediensystem zur Wartung von Maschinen bekannt, das ein Bedienteil aufweist, welches sowohl an der Maschine als auch an einer Tragevorrichtung am Gürtel eines Benutzers anbringbar ist. Das Bediensystem weist weiterhin einen Signalgeber mit einem Empfänger auf, an den von einem Sender des Bediengerätes Alarm- und Warnsignale übertragen werden können. Der Signalgeber kann am Handgelenk des Benutzers angeordnet werden. Sowohl der Signalgeber als auch das Bedienteil benötigen eine eigene Stromversorgung.

Nachteilig auch hier ist, dass zur Dokumentation der Wartungsarbeiten die Wartungsarbeiten unterbrochen werden müssen und die Gefahr besteht, dass bestimmte Arbeitsschritte nicht ausreichend dokumentiert werden, weil beispielsweise keine Dokumentationseinheiten am Ort der Tätigkeit vorliegen. Weiterhin nachteilig ist, beispielsweise bei großen Bioreaktoren, die eine Höhe bis zu drei Metern aufweisen, dass Wartungsarbeiten mit unterschiedlichen Werkzeugen durchzuführen sind, die jeweils elektrisch betrieben werden. Längere Stromkabel sind bei den Wartungsarbeiten hinderlich und übliche Akkus von handbetätigten Werkzeugen sind schnell leer und müssen zeitaufwendig wieder aufgeladen werden.

Aus der DE 10 2013 214 576 A1 ist ein Verfahren und eine Vorrichtung zum Ermitteln einer Position mittels eines tragbaren Bewegungssensors bekannt. Durch Ausbilden eines mobilen Endgerätes als elektronisches Accessoire kann eine Benutzeraktivität besser bestimmt werden, wenn das Accessoire fest mit dem Körper der Person verbunden ist. Das Accessoire kann dabei sensorisch nur einen Bewegungssensor aufweisen. Dessen Sensorsignale können beispielsweise an eine als Smart Phone ausgebildete mobile Einheit übertragen werden, in dem auch Signale weiterer im Smart Phone Sensoren verarbeitet werden um die Position einer Person zu bestimmen, die das Accessoire trägt und auch das Smart Phone mit sich trägt.

Aus der US 2017/0197302 A1 ist eine Serviceeinheit, die am Körper einer Bedienperson über ein Tragesystem (Gürtel und Brille) tragbar ist, bekannt. Ein elektrisch betriebenes Werkzeug weist zu seiner Spannungsversorgung eine übliche Spannungsquelle auf, die als ein Akkumulator ausgebildet und fest an das Werkzeug ankoppelbar ist.

Nachteilig dabei ist, dass die bekannte Spannungsquelle nicht Teil des Tragesystems ist und ihr Gewicht beim Halten des Werkzeuges von der Hand der Bedienperson mitgetragen werden muss. Somit muss die im Werkzeug angeordnete Spannungsquelle auf Kosten der Kapazität klein und leicht ausgebildet sein und nach relativ kurzer Benutzungsdauer wieder aufgeladen werden.

Weiterhin nachteilig ist, dass bei der US 2017/0197302 A1 keine Ablage für Werkzeuge etc. vorgesehen ist.

### Aufgabenstellung

Es ist die Aufgabe der vorliegenden Erfindung, die bekannten Serviceeinheiten so zu verbessern, dass die Überwachung und Dokumentation der Wartungsarbeiten einfacher und sicherer wird.

Weitere Aufgabe ist es, ein verbessertes Verfahren zur Überwachung und Dokumentation von Wartungsarbeiten mit einer Serviceeinheit anzugeben.

### Darlegung der Erfindung

Diese Aufgabe bezüglich der Serviceeinheit wird in Verbindung mit dem Oberbegriff des Anspruches 1 dadurch gelöst, dass das Tragesystem als eine Kombination von einem Rucksack und einem Tragegurtsystem ausgebildet ist, dass die Spannungsquelle am Rücken der Bedienperson angeordnet ist, dass die Spannungsquelle zur Spannungsversorgung der mit ihr verbindbaren elektrisch betriebenen Werkzeuge ausgelegt ist, dass das Tragesystem im vorderen Gürtelbereich der Bedienperson eine ausklappbare Ablage zum Ablegen von Werkzeug aufweist, dass das Tragesystem eine integrierte Rechen- und Dokumentationseinheit zur Überwachung und Dokumentation von Wartungsarbeiten aufweist, dass die Rechen- und Dokumentationseinheit aus der Spannungsquelle gespeist wird, dass die Rechen- und Dokumentationseinheit mit mindestens einem Bewegungssensor und/oder Ortungssensor zur Feststellung der mit dem Werkzeug durchgeführten Bewegung und deren Aufzeichnung verbunden ist, und dass der Bewegungssensor an dem Werkzeug oder der Hand der Bedienperson angeordnet ist.

Durch die Ausbildung des Tragesystems als eine Kombination von einem Rucksack und einem Tragegurtsystem wird die Anordnung einer relativ schweren und voluminösen Spannungsquelle am Rücken der Bedienperson ermöglicht. Damit hat die Bedienperson in ihrem vorderen Bereich eine relativ große Bewegungsfreiheit.

Durch die integrierte Rechen- und Dokumentationseinheit, die aus der Spannungsquelle der Serviceeinheit gespeist werden kann, wird eine sichere Überwachung und schnelle Dokumentation von Wartungsarbeiten gewährleistet. Lange Unterbrechungspausen zur Dokumentation der Arbeitsschritte sind dabei nicht notwendig.

Unter Werkzeuge im Sinne dieser Anmeldung sollen auch bei den Wartungsarbeiten genutzte Geräte oder Maschinen verstanden werden.

Dadurch, dass das Tragesystem im vorderen Gürtelbereich des Benutzers/Bedienperson eine ausklappbare Ablage aufweist, können bei Bedarf auf der Ablage Werkzeuge abgelegt werden. Grundsätzlich kann die Ablage aber auch als eine ausklappbare Anzeigevorrichtung/Display ausgebildet sein.

Bei einer bevorzugten Ausführungsform der Erfindung weist die Rechen- und Dokumentationseinheit einen Datenspeicher zum Abrufen und Speichern von Daten sowie mindestens eine Dateneingabevorrichtung auf. Aus dem Datenspeicher können bei Bedarf jeweils Anleitungen oder Hinweise für die durchzuführenden Wartungsarbeiten abgerufen werden. Über eine Dateneingabevorrichtung können durchgeführte Wartungsarbeiten in dem Datenspeicher eingegeben und gespeichert werden. Bei der Dateneingabevorrichtung kann es sich sowohl um eine Tastatur als auch um einen Touchscreen handeln.

Dateneingabe und/oder der Datenspeicher können mit einem Netzwerk (z.B. WLAN, lokales Netzwerk, Cloud) verbunden werden. Darüber ist der Austausch von Daten in beide Richtungen gewährleistet, um eine Tätigkeit erwartungsgemäß durchzuführen. Anleitungen und Hinweise können unter anderem Serviceanleitungen, SOPs (Standard Operation Procedures), vorgegebene Handlungsanweisungen, Bedienungsvorschriften oder Sicherheitsanweisungen sein. Für eine Spracheingabe kann die Dateneingabevorrichtung oder die Rechen- und Dokumentationseinheit auch mit einem Mikrofon verbunden sein. Durch die Spracheingabe über ein Mikrofon muss die Bedienperson während der Eingabe ihr Werkzeug nicht aus der Hand legen.

Gemäß einer weiteren bevorzugten Ausführungsform der Erfindung steht die Rechen- und Dokumentationseinheit mit einer am Körper der Bedienperson tragbaren Kamera in Verbindung. Die Kamera kann bspw. an einem Brillenbügel einer Brille des Bedieners befestigt sein. Es ist aber auch möglich, die Kamera an der Schulter oder in einem anderen Bereich des Körpers der Bedienperson anzuordnen (z.B. Kontaktlinse). Durch eine Aufzeichnung mit der Kamera ist ein lückenloser Nachweis durchgeführter Wartungsarbeiten besonders sicher. Die Dokumentationseinheit kann auch zur Erstellung von elektronischen Aufzeichnungen beispielsweise nach dem FDA-Standard Title 21 CFR Part 11 verwendet werden.

Bei einer weiteren bevorzugten Ausführungsform der Erfindung ist die Rechen- und Dokumentationseinheit mit einer Datenausgabeeinheit verbunden. Auszugebende Daten können dabei bspw. auf einem Bildschirm dargestellt werden. Es ist aber auch möglich, auszugebende Daten in einem verspiegelten Teilbereich einer Brille der Bedienperson einzuspiegeln. Grundsätzlich ist es aber auch möglich, auszugebende Daten akustisch über einen Lautsprecher auszugeben oder über einen Drucker, der tragbar sein kann, auszudrucken. Auszugebende Daten können außerdem über ein verbundenes Netzwerk weitergeleitet werden.

Nach einer bevorzugten Ausführungsform der Erfindung ist der Bewegungssensor als ein dem Fachmann bekannter Gyrosensor ausgebildet. Insbesondere ist es auch möglich, dass der Gyrosensor mit einem GPS-System in Verbindung steht, um so die von dem Werkzeug im Raum durchgeführten Bewegungen exakter erkennen und aufzeichnen zu können.

Das Werkzeug kann ein heizbares Messer, bspw. zum einfachen Schneiden von Kunststoff sein. Das elektrisch betriebene Werkzeug kann aber auch ein Kunststoffschweißgerät zum Schweißen von Kunststoffen sein. Auch ist es bspw. möglich, dass das elektrisch betriebene Werkzeug als ein Schraubwerkzeug ausgebildet ist.

Gemäß einer weiteren bevorzugten Ausführungsform der Erfindung ist die Rechen- und Dokumentationseinheit über ein Mobilfunknetz, oder ein Firmennetzwerk, oder WLAN oder ein anderes Netzwerk (zum Beispiel ein lokales Netz) mit einem externen Rechner verbindbar und dadurch ist es möglich, von dem externen Rechner Serviceinformationen abzurufen oder auf dem externen Rechner Wartungsinformationen über die durchgeführte Wartung abzuspeichern.

Die Aufgabe bezüglich des Verfahrens wird in Verbindung mit dem Oberbegriff des Anspruches 8 dadurch gelöst, dass für die Wartungsarbeiten vorzunehmende Wartungsschritte über die Rechen- und Dokumentationseinheit von der Bedienperson bei Bedarf abgerufen werden, und dass die einzelnen durchgeführten Wartungsschritte von der Rechen- und Dokumentationseinheit überwacht und dokumentiert werden.

Durch die von der Rechen- und Dokumentationseinheit überwachten und dokumentierten einzelnen Wartungsschritte kann relativ unterbrechungsfrei eine Wartung mit der Serviceeinheit durchgeführt und sicher und zuverlässig dokumentiert werden. Dadurch wird ein insgesamt schnelleres und zugleich sichereres Arbeiten erreicht.

Bei einer bevorzugten Ausführungsform des Verfahrens werden die Wartungsarbeiten an einer biotechnischen oder pharmazeutischen Produktionsanlage durchgeführt.

Bei einer weiteren bevorzugten Ausführungsform des Verfahrens werden die Wartungsarbeiten in einem Laborbereich durchgeführt.

Mit dem erfindungsgemäßen Verfahren und der erfindungsgemäßen Vorrichtung lassen sich gerade die für bestimmte bio-technische Produktionsanlagen strengen Dokumentationspflichten schnell und zugleich sicher erfüllen.

Bevorzugte Ausführungsformen sind Gegenstand der abhängigen Ansprüche.

Weitere Merkmale und Vorteile der Erfindung ergeben sich aus der nachfolgenden speziellen Beschreibung und den Zeichnungen.

### Kurzbeschreibung der Zeichnungen

Es zeigen:

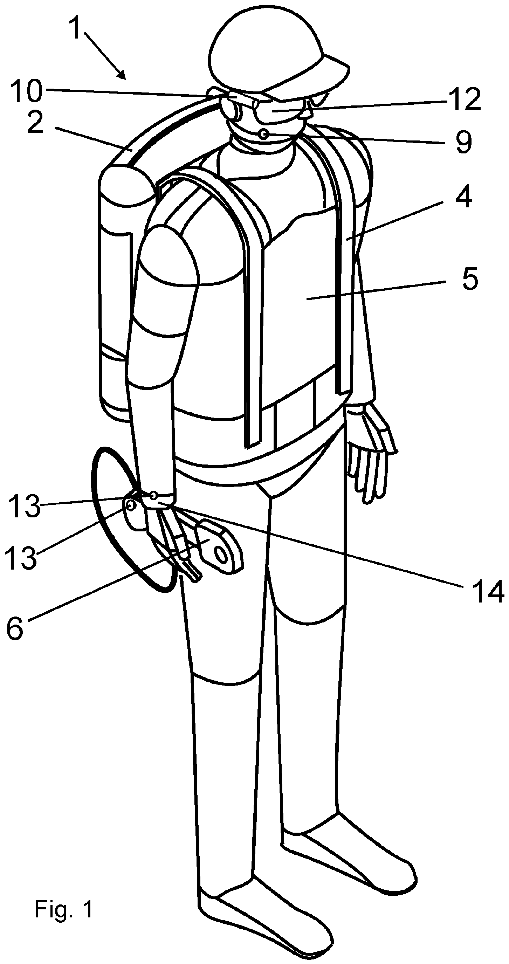

- Figur 1:: eine räumlich Darstellung einer Bedienperson mit einer Serviceeinheit und

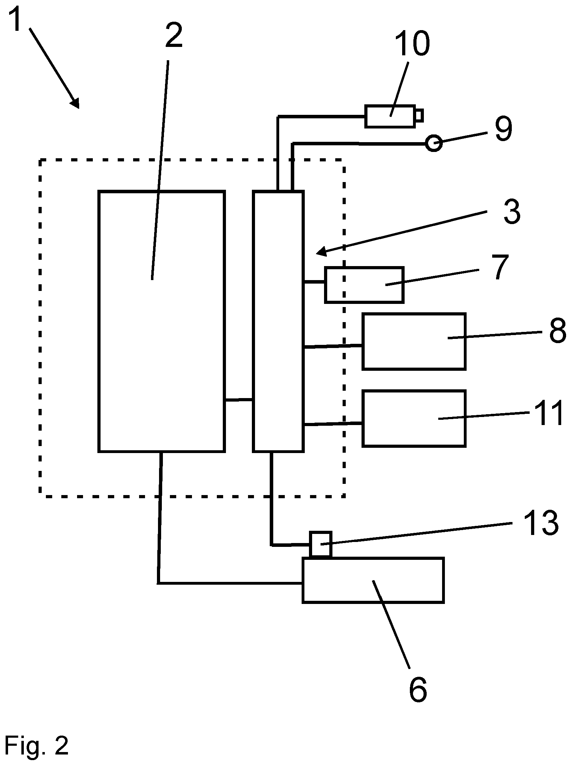

- Figur 2:: ein Blockschaltbild einer Serviceeinheit.

### Beschreibung bevorzugter Ausführungsformen

Eine Serviceeinheit 1 besteht im Wesentlichen aus einer Spannungsquelle 2, einer Rechen- und Dokumentationseinheit 3 und einem Tragesystem 4. Die Serviceeinheit 1 mit der Spannungsquelle 2 und der Rechen- und Dokumentationseinheit 3 wird für Servicezwecke von einer Bedienperson 5 in dem Tragesystem 4 getragen. Die Spannungsquelle 2 besteht aus mindestens einem wiederaufladbaren Akkumulator und ist zur Spannungsversorgung mit der Spannungsquelle 2 verbindbaren, elektrisch betriebenen Werkzeugen 6 ausgelegt. Unterschiedliche Werkzeuge 6 können dabei mit unterschiedlicher Spannung und Leistung versorgt werden. Die Rechen- und Dokumentationseinheit 3, die bspw. auch als ein Rechner oder Notebook ausgebildet sein kann, kann grundsätzlich ebenfalls aus der Spannungsquelle 2 gespeist werden. Die Rechen- und Dokumentationseinheit 3 weist einen Datenspeicher 7 zum Abrufen und Speichern von Daten auf. Weiter weist die Rechen- und Dokumentationseinheit 3 mindestens eine Dateneingabevorrichtung 8 zur Eingabe von Daten auf. Die Dateneingabevorrichtung 8 kann bspw. als eine Eingabetastatur oder ein Touchscreen ausgebildet sein. Auch ein mit der Rechen- und Dokumentationseinheit 3 verbundenes Mikrofon 9 kann zur Eingabe von Daten in akustischer Form genutzt werden. Weiterhin kann eine mit der Rechen- und Dokumentationseinheit 3 in Verbindung stehende Kamera 10 zur Dokumentation und Eingabe von Daten genutzt werden. Die Kamera 10 ist bevorzugt am Körper der Bedienperson 5, bspw. an deren Kopf, angeordnet. Grundsätzlich ist es aber auch möglich die Kamera 10 an dem Werkzeug 6 anzuordnen. Die Rechen- und Dokumentationseinheit 3 ist zudem mit einer Datenausgabeeinheit 11 verbunden. Die Daten der Datenausgabeeinheit 11 können dabei auf einem nicht weiter dargestelltem Display oder Bildschirm angezeigt werden. Es ist grundsätzlich aber auch mögliche die Daten der Datenausgabeeinheit in einen Teilbereich der von der Bedienperson getragenen Brille 12 einzuspiegeln. Die Rechen- und Dokumentationseinheit 3 ist mit einem Bewegungssensor 13 verbunden. Der Bewegungssensor 13 kann bspw. an dem Werkzeug 6 oder der Hand 14 der Bedienperson 5 angeordnet sein. Der Bewegungssensor 13 kann insbesondere als ein dem Fachmann als Gyrosensor bekannter Sensor ausgebildet sein. Das elektrisch betriebene Werkzeug 6 kann bspw. als ein heizbares Messer oder ein Kunststoffschweißgerät oder ein Schraubwerkzeug ausgebildet sein.

Im Tragesystem 4 kann im vorderen Gürtelbereich der Bedienperson 5 eine nicht weiter dargestellte ausklappbare Ablage angeordnet sein. Grundsätzlich ist es auch möglich, dass die Rechen- und Dokumentationseinheit 3 über ein Mobilfunknetz oder anderes Netzwerk mit einem nicht weiter dargestellten Rechner verbindbar ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 1: Serviceeinheit
- 2: Spannungsquelle
- 3: Rechen- und Dokumentationseinheit
- 4: Tragesystem
- 5: Bedienperson
- 6: Werkzeug
- 7: Datenspeicher
- 8: Dateneingabevorrichtung
- 9: Mikrofon
- 10: Kamera
- 11: Datenausgabeeinheit
- 12: Brille
- 13: Bewegungssensor
- 14: Hand

## Patentansprüche

1. Serviceeinheit (1), die am Körper einer Bedienperson (5) über ein Tragesystem (4) tragbar ist, mit mindestens einer Spannungsquelle (2) zur Spannungsversorgung von mit der Spannungsquelle (2) verbindbaren, elektrisch betriebenen Werkzeugen (6), wobei die Spannungsquelle (2) aus mindestens einem wieder aufladbaren Akkumulator ausgebildet ist,
**dadurch gekennzeichnet,**
**dass** das Tragesystem (4) als eine Kombination von einem Rucksack und einem Tragegurtsystem ausgebildet ist,
**dass** die Spannungsquelle (2) am Rücken der Bedienperson angeordnet ist, dass die Spannungsquelle (2) zur Spannungsversorgung der mit ihr verbindbaren elektrisch betriebenen Werkzeuge (6) ausgelegt ist,
**dass** das Tragesystem (4) im vorderen Gürtelbereich der Bedienperson (5) eine ausklappbare Ablage zum Ablegen von Werkzeugen aufweist,
**dass** das Tragesystem (4) eine integrierte Rechen- und Dokumentationseinheit (3) zur Überwachung und Dokumentation von Wartungsarbeiten aufweist,
**dass** die Rechen- und Dokumentationseinheit (3) aus der Spannungsquelle (2) gespeist wird,
**dass** die Rechen- und Dokumentationseinheit (3) mit mindestens einem Bewegungssensor (13) und/oder Ortungssensor zur Feststellung einer mit dem Werkzeug (6) durchgeführten Bewegung und deren Aufzeichnung verbunden ist, und
**dass** der Bewegungssensor (13) an dem Werkzeug (6) oder der Hand (14) der Bedienperson (5) angeordnet ist.

2. Serviceeinheit nach Anspruch 1,
**dadurch gekennzeichnet,**
**dass** die Rechen- und Dokumentationseinheit (3) einen Datenspeicher (7) zum Abrufen und Speichern von Daten, sowie mindestens eine Dateneingabevorrichtung (8) aufweist.

3. Serviceeinheit nach Anspruch 1 oder 2,
**dadurch gekennzeichnet,**
**dass** die Rechen- und Dokumentationseinheit (3) mit einer am Körper der Bedienperson (5) tragbaren Kamera (10) in Verbindung steht.

4. Serviceeinheit nach einem der Ansprüche 1 bis 3,
**dadurch gekennzeichnet,**
**dass** die Rechen- und Dokumentationseinheit (3) mit einer Datenausgabeeinheit (11) verbunden ist.

5. Serviceeinheit nach einem der Ansprüche 1 bis 4,
**dadurch gekennzeichnet,**
**dass** der Bewegungssensor (13) als ein Gyrosensor ausgebildet ist.

6. Serviceeinheit nach einem der Ansprüche 1 bis 5,
**dadurch gekennzeichnet,**
**dass** das elektrisch betriebene Werkzeug (6) ein heizbares Messer oder ein Kunststoffschweißgerät oder ein Schraubwerkzeug ist.

7. Serviceeinheit nach einem der Ansprüche 1 bis 6,
**dadurch gekennzeichnet,**
**dass** die Rechen- und Dokumentationseinheit (3) über ein Mobilfunknetz, WLAN, oder ein lokales Netz mit einem externen Rechner verbindbar ist.

8. Verfahren zur Überwachung und Dokumentation von Wartungsarbeiten mit einer Serviceeinheit (1) nach einem der Ansprüche 1 bis 7,
**dadurch gekennzeichnet,**
**dass** für die Wartungsarbeiten vorzunehmende Wartungsschritte über die Rechen- und Dokumentationseinheit (3) von der Bedienperson (5) bei Bedarf abgerufen werden,
**dass** die einzelnen durchgeführten Wartungsschritte von der Rechen- und Dokumentationseinheit (3) überwacht und dokumentiert werden.

9. Verfahren nach Anspruch 8,
**dadurch gekennzeichnet,**
**dass** die Wartungsarbeiten an einer biotechnischen oder pharmazeutischen Produktionsanlage durchgeführt werden.

10. Verfahren nach Anspruch 8 oder 9,
**dadurch gekennzeichnet,**
**dass** die Wartungsarbeiten in einem Laborbereich durchgeführt werden.

## Claims

1. Service unit (1) that can be carried on the body of a user (5) by means of a carrying system (4), having at least one power source (2) for supplying power to electrically operated tools (6) connectable to the power source (2), the power source (2) being formed from at least one rechargeable battery,
**characterized in that**
the carrying system (4) is formed as a combination of a backpack and a carrying strap system, that the power source (2) is arranged on the back of a user,
the power source (2) is designed for supplying power to the electrically operated tools (6) connectable to it,
the carrying system (4) has a folding storage place for storing of tools in the front belt area of the user (5),
the carrying system (4) has an integrated computation and documentation unit (3) for monitoring and documenting maintenance work,
the computation and documentation unit (3) is supplied with power from the power source (2),
the computation and documentation unit (3) is connected to at least one movement sensor (13) and/or positioning sensor for detecting a movement carried out with the tool (6), and
the movement sensor (13) is arranged on the tool (6) or the hand (14) of the user (5).

2. The service unit according to claim 1,
**characterized in that**
the computation and documentation unit (3) has a data storage (7) for retrieving and storing data, as well as at least one data input device (8).

3. The service unit according to claim 1 or 2,
**characterized in that**
the computation and documentation unit (3) is connected to a camera (10) that can be carried on the body of the user (5).

4. The service unit according to any of claims 1 to 3,
**characterized in that**
the computation and documentation unit (3) is connected to a data output unit (11).

5. The service unit according to any of claims 1 to 4,
**characterized in that**
the movement sensor (13) is formed as a gyro sensor.

6. The service unit according to any of claims 1 to 5,
**characterized in that**
the electrically operated tool (6) is a heatable knife or a plastic welding device or a screw tool.

7. The service unit according to any of claims 1 to 6,
**characterized in that**
the computation and documentation unit (3) is connected to an external computer via a cellular network, WLAN or a local network.

8. A method for monitoring and documenting maintenance work with a service unit (1) according to any of claims 1 to 7,
**characterized in that**
maintenance steps to be performed via the computation and documentation unit (3) for the maintenance work can if necessary, be retrieved by the user (5), that the individual performed maintenance steps are monitored by the computation and documentation unit (3).

9. The method according to claim 8,
**characterized in that**
the maintenance work is performed on a biotechnical or pharmaceutical production system.

10. The method according to claim 8 or 9,
**characterized in that**
the maintenance work is performed in a laboratory suite.

## Revendications

1. Unité de service (1) qui peut être portée contre le corps d'un opérateur (5) via un système de portage (4), avec au moins une source de tension (2) pour l'alimentation en tension d'outils (6) actionnés électriquement et qui peuvent être reliés à la source de tension (2), dans laquelle la source de tension (2) est formée d'au moins un accumulateur rechargeable,
**caractérisée en ce que**
le système de portage (4) est formé en tant que combinaison d'un sac à dos et d'un système de ceinture de portage,
la source de tension (2) est agencée contre le dos de l'opérateur,
la source de tension (2) est conçue pour l'alimentation en tension des outils (6) électriquement actionnés et qui peuvent être reliés à elle,
le système de portage (4) présente dans la zone avant de la ceinture de l'opérateur (5) une tablette escamotable pour déposer des outils,
le système de portage (4) présente une unité de calcul et de documentation (3) intégrée pour la surveillance et la documentation de travaux de maintenance,
l'unité de calcul et de documentation (3) est approvisionnée depuis la source de tension (2),
l'unité de calcul et de documentation (3) est reliée à au moins un capteur de mouvement (13) et/ou capteur de localisation pour la détection d'un mouvement réalisé avec l'outil (6) et son enregistrement, et
le capteur de mouvement (13) est agencé contre l'outil (6) ou la main (14) de l'opérateur (5).

2. Unité de service selon la revendication 1,
**caractérisée en ce que**
l'unité de calcul et de documentation (3) présente une mémoire de données (7) pour extraire et mémoriser des données, ainsi qu'au moins un dispositif de saisie des données (8).

3. Unité de service selon la revendication 1 ou 2,
**caractérisée en ce que**
l'unité de calcul et de documentation (3) se trouve en relation avec une caméra (10) qui peut être portée contre le corps de l'opérateur (5).

4. Unité de service selon l'une des revendications 1 à 3,
**caractérisée en ce que**
l'unité de calcul et de documentation (3) est reliée à une unité de sortie de données (11).

5. Unité de service selon l'une des revendications 1 à 4,
**caractérisée en ce que**
le capteur de mouvement (13) est formé en tant que gyrocapteur.

6. Unité de service selon l'une des revendications 1 à 5,
**caractérisée en ce que**
l'outil (6) actionné électriquement est un couteau chauffant ou un appareil de soudage pour les matières plastiques ou un outil de vissage.

7. Unité de service selon l'une des revendications 1 à 6,
**caractérisée en ce que**
l'unité de calcul et de documentation (3) peut être reliée à un calculateur externe via un réseau de téléphonie mobile, un réseau local sans fil ou un réseau local.

8. Procédé de surveillance et de documentation de travaux de maintenance avec une unité de service (1) selon l'une des revendications 1 à 7,
**caractérisé en ce que**
les étapes de maintenance à effectuer pour les travaux de maintenance sont extraites si nécessaire par l'opérateur (5) via l'unité de calcul et de documentation (3),
les étapes de maintenance individuelles effectuées sont surveillées et documentées par l'unité de calcul et de documentation (3).

9. Procédé selon la revendication 8,
**caractérisé en ce que**
les travaux de maintenance sont effectués au niveau d'une installation de production biotechnique ou pharmaceutique.

10. Procédé selon la revendication 8 ou 9,
**caractérisé en ce que**
les travaux de maintenance sont effectués dans une zone de laboratoire.
